# EUROPÄISCHE PATENTANMELDUNG

(11) **EP 2 026 413 A2**
(43) Veröffentlichungstag der Anmeldung: **18.02.2009**
(21) Anmeldenummer: 08010767.5
(22) Anmeldetag: 13.06.2008
(51) Int. Cl.: H01R 9/24, H01R 4/24, H01R 13/514

(54) **Verteilerleiste einer Telekommunikationsanlage**

(30) Priorität: 31.07.2007 DE 202007010781 U
(71) Anmelder: CCS Technology, Inc., Wilmington, DE 19803 (US)
(72) Erfinder: Matthies, Jürgen, Dipl.-Ing, 58300 Wetter (Ruhr) (DE); Breuer-Heckel, Mike, Dipl.-Ing., 44143 Dortmund (DE); Badura, Stefan, Dipl.-Ing., 58708 Menden (DE); Kittler, Lars, Dipl.-Ing., 58239 Schwerte (DE); Hoffmann, Wolfgang, Dr.-Ing., 58097 Hagen (DE); Höpfner, Andrea, Dipl.-Ing, 58089 Hagen (DE)
(74) Vertreter: Sturm, Christoph

(57) **Zusammenfassung**

Die Erfindung betrifft eine Verteilerleiste (20) einer Telekommunikationsanlage, mit mehreren Funktionselementen (24), wobei jedes Funktionselement (24) mindestens zwei zusammenwirkende Kontaktfedern umfasst, wobei die Kontaktfedern an einer Vorderseite (25) der Verteilerleiste insbesondere als IDC-Kontakte ausgebildete Anschlusselemente (26) für den Anschluss von Kabeladern eines Teilnehmerkabels und/oder Systemkabels und/oder Rangierkabels bilden. Die erfindungsgemäße Verteilerleiste (20) umfasst ein Gehäuse (21), das mindestens einen Aufnahmeraum (23) zur bedarfgerechten, nachrüstbaren Aufnahme mindestens eines Basismoduls (22) aufweist, wobei das oder jedes Basismodul (22) mindestens ein Funktionselement (24) umfasst

## Beschreibung

Die Erfindung betrifft eine Verteilerleiste einer Telekommunikationsanlage nach dem Oberbegriff des Anspruchs 1.

In der Telekommunikationstechnik kommen Verteilerleisten zum Einsatz, um Kabeladern sogenannter Teilnehmerkabel und/oder Systemkabel und/oder Rangierkabel anzuschließen. Aus dem Produktkatalog "Anschluss- und Verteilersysteme, Ausgabe 1, Corning Cable Systems GmbH & Co. KG, Jahr 2000" sind unterschiedliche Verteilerleisten von Telekommunikationsanlagen bekannt, wobei sämtliche Verteilerleisten mehrere Funktionselemente umfassen. Jedes Funktionselement weist mindestens zwei Kontaktfedern auf. Die Kontaktfedern bilden an einer Vorderseite der Verteilerleiste als IDC-Kontakte ausgebildete Anschlusselemente für den Anschluss von Kabeladern eines Teilnehmerkabels und/oder Systemkabels und/oder Rangierkabels aus.

Aus der Praxis bekannte Verteilerleisten verfügen über ein Gehäuse, in dem mehrere Funktionselemente bzw. Kontaktfedern mehrerer Funktionselemente fest aufgenommen sind. Dabei ist ein Funktionselement stets auf eine feste Anzahl von anzuschließenden Kabeladern eines Teilnehmerkabels und/oder Systemkabels und/oder Rangierkabels ausgelegt. Typischerweise sind die Verteilerleisten derart ausgelegt, dass dieselben Funktionselemente in einer Anzahl umfassen, dass die Kabeladern von acht Aderpaaren oder zehn Aderpaaren an der Verteilerleiste angeschlossen werden können. Die Anzahl der Funktionselemente je Verteilerleiste ist dabei fix bzw. nicht veränderbar. Hierdurch wird die Flexibilität beschränkt.

Hiervon ausgehend liegt der vorliegende Erfindung das Problem zu Grunde, eine neuartige Verteilerleiste einer Telekommunikationsanlage zu schaffen. Dieses Problem wird durch eine Verteilerleiste gemäß Anspruch 1 gelöst. Die erfindungsgemäße Verteilerleiste weist ein Gehäuse auf, das mindestens einen Aufnahmeraum zur bedarfgerechten, nachrüstbaren Aufnahme mindestens eines Basismoduls umfasst, wobei das oder jedes Basismodul jeweils mindestens ein Funktionselement umfasst.

Die erfindungsgemäße Verteilerleiste ist flexibel und bedarfsgerecht um Funktionselemente erweiterbar. Die erfindungsgemäße Verteilerleiste umfasst hierzu ein Gehäuse sowie mindestens ein Basismodul, wobei das oder jedes Basismodul mindestens ein Funktionselement umfasst und in mindestens einem Aufnahmeraum des Gehäuses positioniert werden kann. Durch entsprechende Kombination des Gehäuses mit einer unterschiedlichen Anzahl von Basismodulen und/oder unterschiedlich konfigurierten Basismodulen kann hierdurch eine individuell angepasste Verteilerleiste bereitgestellt werden. Hierdurch wir eine hohe Flexibilität gewährleistet.

Bevorzugte Weiterbildungen der Erfindung ergeben sich aus den Unteransprüchen und der nachfolgenden Beschreibung. Ausführungsbeispiele werden anhand der Zeichnung näher erläutert. In der Zeichnung zeigt:
- Fig. 1: eine perspektivische Ansicht einer aus dem Stand der Technik bekannten Verteilerleiste;
- Fig. 2: eine perspektivische Ansicht einer erfindungsgemäßen Verteiler- leiste; und
- Fig. 3: eine weitere perspektivische Ansicht einer erfindungsgemäßen Verteilerleiste.

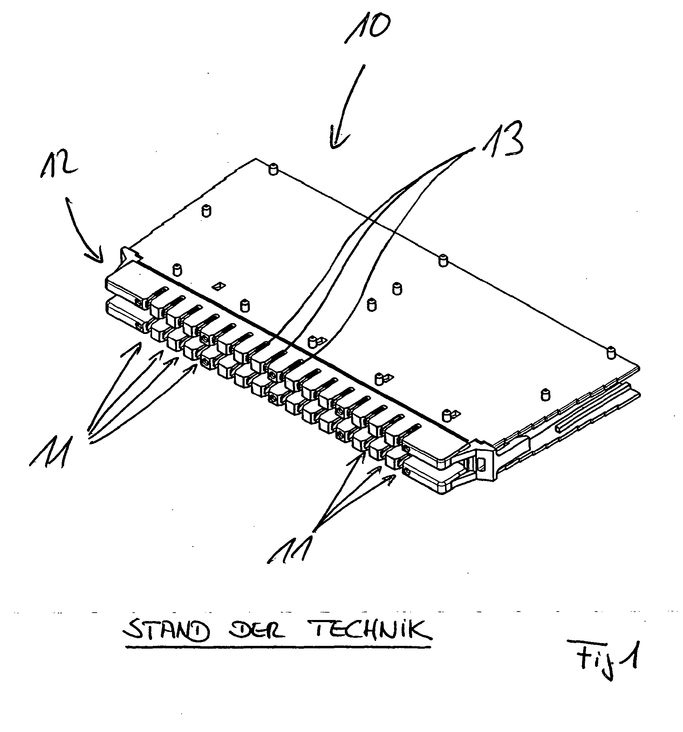

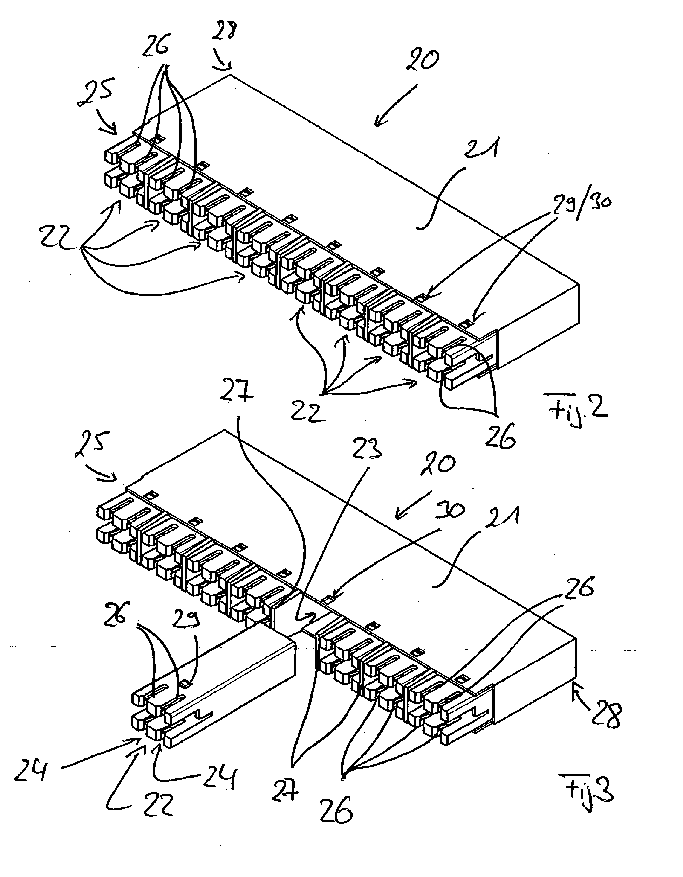

Bevor nachfolgend unter Bezugnahme auf Fig. 2 und 3 die hier vorliegende Erfindung im Detail beschrieben wird, soll vorab unter Bezugnahme auf Fig. 1 auf den Stand der Technik eingegangen werden.

Fig. 1 zeigt in perspektivischer Ansicht eine aus dem Stand der Technik bekannte Verteilerleiste 10 einer Telekommunikationsanlage, wobei die Verteilerleiste 10 mehrere Funktionselemente 11 umfasst. Jedes Funktionselement 11 umfasst mindestens zwei Kontaktfedern, die an einer Vorderseite 12 der Verteilerleiste 10 als IDC-Kontakte ausgebildete Anschlusselemente 13 für den Anschluss von Kabeladern eines Teilnehmerkabels und/oder Systemkabels und/oder Rangierkabels bilden. Die an der Vorderseite 12 der Verteilerleiste 10 positionierten, als IDC-Kontakte ausgebildeten Anschlusselemente 13 sind in zwei Reihen übereinander positioniert, wobei jedes der Funktionselemente 11 zwei übereinander positionierte Anschlusselemente 13 umfasst.

Im Ausführungsbeispiel der Fig. 1 umfasst die Verteilerleiste 10 sechzehn Funktionselemente oder acht Gruppen aus jeweils zwei Funktionselementen 11. Bei der aus dem Stand der Technik bekannten Verteilerleiste 10 ist die Anzahl der Funktionselemente 11 fest vorgegeben und nicht veränderbar.

Fig. 2 und 3 zeigen perspektivische Ansichten einer erfindungsgemäßen Verteilerleiste 20 einer Telekommunikationsanlage. Die erfindungsgemäße Verteilerleiste 20 verfügt über ein Gehäuse 21, in welchem im Ausführungsbeispiel der Fig. 2 und 3 acht Basismodule 22 aufgenommen sind, wobei das Gehäuse 21 zur Aufnahme jedes Basismoduls 22 einen separaten Aufnahmeraum 23 aufweist. In der Darstellung der Fig. 3 ist eines der Basismodule 22 aus dem entsprechenden Aufnahmeraum 23 herausgenommen.

Im gezeigten Ausführungsbeispiel weist jedes Basismodul 22 insgesamt zwei Funktionselemente 24 mit den entsprechenden Kontaktfedern auf, wobei die Kontaktfedern an einer Vorderseite 25 der Verteilerleiste 20 als IDC-Kontakte ausgebildete Anschlusselemente 26 für den Anschluss von Kabeladern eines Teilnehmerkabels und/oder Systemkabels und/oder Rangierkabels bilden.

Bei der erfindungsgemäßen Verteilerleiste 20 kann das Gehäuse 21 bedarfsgerecht mit Basismodulen 22 nachgerüstet werden. So ist es möglich, dass im Ausführungsbeispiel der Fig. 2 und 3 zuerst eine Verteilerleiste mit lediglich einem Basismodul 22 bei einem Kunden installiert wird, und dass erst anschließend zur Erweiterung zu einem späteren Zeitpunkt weitere Basismodule 22 in das Gehäuse der Verteilerleiste 20 eingeführt werden.

Ein wesentlicher Vorteil der erfindungsgemäßen Verteilerleiste 20 liegt demnach darin, dass die Anzahl der Basismodule 22 und damit der Funktionselemente 24 nicht fest vorgegeben ist, sondern vielmehr diese Anzahl bedarfsgerecht bereitgestellt sowie nachgerüstet werden kann.

Wie bereits ausgeführt, umfasst im gezeigten Ausführungsbeispiel das Gehäuse 21 der Verteilerleiste 20 insgesamt acht Aufnahmeräume 23, wobei in jedem Aufnahmeraum 23 ein einziges Basismodul 22 mit jeweils zwei Funktionselementen 24 aufgenommen werden kann. Im Unterschied hierzu kann die Anzahl der Aufnahmeräume, die Anzahl der je Aufnahmeraum aufnehmbaren Basismodule sowie die Anzahl der Funktionselemente je Basismodul variieren.

Im gezeigten Ausführungsbeispiel der Fig. 2 und 3 sind benachbarte Aufnahmeräume 23 durch geschlossene Trennwände 27 voneinander getrennt. Dabei können die Trennwände 27 metallisch oder metallisiert ausgeführt sein, um in benachbarten Aufnahmeräumen 23 aufgenommene Basismodule 22 gegeneinander zu schirmen.

Die Trennwände können auch rippenartig oder stegartig und damit offen bzw. durchlässig ausgeführt sein. Ebenso ist es möglich, dass zur Bereitstellung einer Schirmung die Basismodule als solche geschirmt sind. So können z.B. die Basismodule metallische oder metallisierte Seitenwände aufweisen, um eine Schirmung gegenüber benachbarten Basismodulen zu gewährleisten.

Im gezeigten Ausführungsbeispiel der Fig. 2 und 3 ist das Gehäuse 21 an der Vorderseite 25 offen ausgebildet, nämlich derart, dass jedes Basismodul 22 über die Vorderseite des Gehäuses 21 in den jeweiligen Aufnahmeraum 23 des Gehäuses 21 einführbar ist. Die als IDC-Kontakte ausgebildeten Anschlusselemente 26 sind dann an der Vorderseite 25 des Gehäuses 21 bzw. der Verteilerleiste 20 zugänglich.

Über die Vorderseite kann ein als Schutzeinrichtung oder als Splittereinrichtung oder als Trenneinrichtung oder als Prüfeinrichtung ausgebildetes Element zwischen übereinander positionierte Kontaktfedern eines Funktionselements 24 bzw. eines Basismoduls 22 eingeführt werden kann.

An einer der Vorderseite 25 gegenüberliegenden Rückseite 28 kann das Gehäuse 21 entweder geschlossen oder offen ausgeführt sein, wobei dann, wenn die Rückseite 28 offen ausgeführt ist, zwischen übereinander positionierte Kontaktfedern eines Funktionselements 24 bzw. eines Basismoduls 22 über die Rückseite ein als Schutzeinrichtung oder als Splittereinrichtung oder als Trenneinrichtung oder als Prüfeinrichtung ausgebildetes Element einführbar ist.

Im Ausführungsbeispiel der Fig. 2 und 3 ist jedes Basismodul 22 im entsprechenden Aufnahmeraum 23 derart positioniert, dass dasselbe im Aufnahmeraum 23 lösbar fixiert ist, wobei hierzu ein widerhakenartiger Vorsprung 29 eines Basismoduls 22 in eine entsprechende Ausnehmung 30 des Gehäuses 21 einrastet.

Im Unterschied hierzu ist es auch möglich, dass die Basismodule 22 unlösbar im jeweiligen Aufnahmeraum 23 des Gehäuses 21 fixiert sind, nämlich mit demselben verschweißt oder verklebt sind.

Ebenso ist es im Unterschied zum Ausführungsbeispiel der Fig. 2 und 3 möglich, dass die Basismodule 22 ausgehend von der Rückseite des Gehäuses in die jeweiligen Aufnahmeräume 23 eingeführt werden, wobei hierzu dann das Gehäuse sowohl im Bereich der Rückseite als auch im Bereich der Vorderseite offen ausgeführt ist, sodass einerseits die Basismodule 22 ausgehend von der Rückseite in den entsprechenden Aufnahmeraum 23 ausgeführt werden können, und dass andererseits die Anschlusselemente der Funktionselemente der Basismodule an der Vorderseite der Verteilerleiste zugänglich sind.

Die erfindungsgemäße Verteilerleiste 20 verfügt demnach über ein Gehäuse 21, in dem bedarfsgerecht Basismodule 22 positioniert werden können, wobei jedes Basismodul 22 die Kontaktfedern mindestens eines Funktionselements 24 enthält. Die Anzahl der je Gehäuse aufgenommenen Basismodule, die Anzahl der Funktionselemente je Basismodul sowie die Anzahl der Kontaktfedern je Funktionselement ist dabei beliebig.

Im gezeigten Ausführungsbeispiel sind sämtliche Basismodule identisch ausgeführt. Es ist auch möglich, unterschiedliche Basismodule zu verwenden, wobei sich die Basismodule dadurch unterscheiden können, dass dieselben eine unterschiedliche Anzahl von Funktionselementen umfassen. Weiterhin können Basismodule mit unterschiedlichen Arten von Funktionselementen, so z. B. mit als Trennelementen oder Schaltelementen oder Durchgangselementen ausgebildeten Funktionselementen in einer Verteilerleiste kombiniert werden. Ebenso ist es möglich, Basismodule in einer Verteilerleiste zu kombinieren, deren Funktionselemente sich hinsichtlich der Anzahl der Kontaktfedern unterscheiden. Hierdurch wird eine individuell konfigurierbare Verteilerleiste bereitgestellt, die durch eine hohe Flexibilität gekennzeichnet ist.

### Bezugszeichenliste

- 10: Verteilerleiste
- 11: Funktionselement
- 12: Vorderseite
- 13: Anschlusselement

- 20: Verteilerleiste
- 21: Gehäuse
- 22: Basismodul
- 23: Aufnahmeraum
- 24: Funktionselement
- 25: Vorderseite
- 26: Anschlusselement
- 27: Trennwand
- 28: Rückseite
- 29: widerhakenartiger Vorsprung
- 30: Ausnehmung

## Patentansprüche

1. Verteilerleiste einer Telekommunikationsanlage, mit mehreren Funktionselementen, wobei jedes Funktionselement mindestens zwei Kontaktfedern umfasst, wobei die Kontaktfedern an einer Vorderseite der Verteilerleiste insbesondere als IDC-Kontakte ausgebildete Anschlusselemente für den Anschluss von Kabeladern eines Teilnehmerkabels und/oder Systemkabels und/oder Rangierkabels bilden, **gekennzeichnet durch** ein Gehäuse (21), das mindestens einen Aufnahmeraum (23) zur bedarfgerechten, nachrüstbaren Aufnahme mindestens eines Basismoduls (22) umfasst, wobei das oder jedes Basismodul (22) mindestens ein Funktionselement (24) umfasst.

2. Verteilerleiste nach Anspruch 1, **dadurch gekennzeichnet, dass** das Gehäuse (21) mehrere durch Trennwände (27) voneinander getrennte Aufnahmeräume (23) aufweist, wobei jeder Aufnahmeraum (23) der Aufnahme mindestens eines Basismoduls (22) dient.

3. Verteilerleiste nach Anspruch 2, **dadurch gekennzeichnet, dass** die Trennwände (27) geschlossen sind und in unterschiedlichen Aufnahmeräume (23) aufgenommene Basismodule (22) gegeneinander schirmen.

4. Verteilerleiste nach Anspruch 2 oder 3, **dadurch gekennzeichnet, dass** jeder Aufnahmeraum (23) der Aufnahme eines einzigen Basismoduls (22) dient.

5. Verteilerleiste nach einem der Ansprüche 1 bis 4, **dadurch gekennzeichnet, dass** jedes Basismodul (22) zwei Funktionselemente (24) umfasst.

6. Verteilerleiste nach einem der Ansprüche 1 bis 5, **dadurch gekennzeichnet, dass** das Gehäuse (21) an einer Vorderseite (25) offen ist, derart, dass das oder jedes Basismodul (22) über die Vorderseite (25) in den jeweiligen Aufnahmeraum (23) des Gehäuses (21) einführbar ist, und dass weiterhin zwischen die Kontaktfedern eines im Gehäuse positionierten Basismoduls (22) über die Vorderseite (25) ein als Schutzeinrichtung oder als Splittereinrichtung oder als Trenneinrichtung oder als Prüfeinrichtung ausgebildetes Element einführbar ist.

7. Verteilerleiste nach Anspruch 6, **dadurch gekennzeichnet, dass** das Gehäuse (21) an einer Rückseite (28) geschlossen ist.

8. Verteilerleiste nach Anspruch 6, **dadurch gekennzeichnet, dass** das Gehäuse (21) an einer Rückseite (28) offen ist, derart, zwischen die Kontaktfedern eines im Gehäuse positionierten Basismoduls (22) über die Rückseite (29) ein als Schutzeinrichtung oder als Splittereinrichtung oder als Trenneinrichtung oder als Prüfeinrichtung ausgebildetes Element einführbar ist.

9. Verteilerleiste nach einem der Ansprüche 1 bis 5, **dadurch gekennzeichnet, dass** das Gehäuse an einer Rückseite offen ist, derart, dass das oder jedes Basismodul über die Rückseite in den jeweiligen Aufnahmeraum des Gehäuses einführbar ist, und dass weiterhin zwischen die Kontaktfedern eines im Gehäuse positionierten Basismoduls über die Rückseite ein als Schutzeinrichtung oder als Splittereinrichtung oder als Trenneinrichtung oder als Prüfeinrichtung ausgebildetes Element einführbar ist.

10. Verteilerleiste nach Anspruch 9, **dadurch gekennzeichnet, dass** das Gehäuse an einer Vorderseite offen ist, derart, dass die Anschlusselemente der Funktionselemente eines im Gehäuse positionierten Basismoduls zugänglich sind.

11. Verteilerleiste nach einem der Ansprüche 1 bis 10, **dadurch gekennzeichnet, dass** das oder jedes Basismodul (22) im entsprechenden Aufnahmeraum derart aufgenommen ist, dass dasselbe im Aufnahmeraum lösbar fixiert ist.

12. Verteilerleiste nach einem der Ansprüche 1 bis 10, **dadurch gekennzeichnet, dass** das oder jedes Basismodul im entsprechenden Aufnahmeraum derart aufgenommen ist, dass dasselbe im Aufnahmeraum unlösbar fixiert ist.

13. Verteilerleiste nach einem der Ansprüche 1 bis 12, **gekennzeichnet durch** unterschiedliche Basismodule, wobei sich die Basismodule **dadurch** unterscheiden, dass dieselben eine unterschiedliche Anzahl von Funktionselementen und/oder unterschiedliche Arten von Funktionselementen und/oder Funktionselemente mit einer unterschiedlicher Anzahl an Kontaktfedern aufweisen.
